# EUROPÄISCHE PATENTANMELDUNG

(11) **EP 1 971 106 A2**
(43) Veröffentlichungstag der Anmeldung: **17.09.2008**
(21) Anmeldenummer: 08075187.8
(22) Anmeldetag: 12.03.2008
(51) Int. Cl.: H04L 29/06

(54) **Verfahren zur Online-Distribution von DRM-Nutzinhalten**

(30) Priorität: 14.03.2007 DE 102007013014
(71) Anmelder: Deutsche Telekom AG, 53113 Bonn (DE); Technische Universität Berlin, 10623 Berlin (DE)
(72) Erfinder: Kraft, Andreas, 14129 Berlin (DE); Oppermann, Jörg, 13125 Berlin (DE); Ren, Zhiyun, 12357 Berlin (DE); Knabner, Alexander, 15711 Neue Mühle (DE); Kölln, Forian, 12161 Berlin (DE); Freese, Behrend, 14059 Berlin (DE)
(74) Vertreter: Drosch, Ulrich

(57) **Zusammenfassung**

Die Erfindung betrifft ein Verfahren zur Online-Distribution digitaler Nutzinhalte (Content), welche durch Digital-Rights-Management (DRM) geschützt sind. Sie ermöglicht es derartigen Content beispielsweise nach dem Bit-Strom-Prinzip über Peer-To-Peer-Netzwerke zu verbreiten.
Erfindungsgemäß werden die, bezogen auf die Distribution eines gleichen Content innerhalb verschiedener DRM-Dateien jeweils identischen Dateisegmente gesteuert durch einen Server zwischen den Endgeräten der Netzwerkteilnehmer Peer-To-Peer ausgetauscht werden, während alle übrigen, für eine jeweilige DRM-Datei spezifischen Bestandteile, einschließlich der Rechte-Kennzeichen von zentraler Stelle (2, 5), nämlich einem Server (2) oder einem Endgerät (5) eines bestimmten anderen Netzwerkteilnehmers auf das Endgerät (1) eines den Content anfordernden Nutzers übertragen werden, wobei die den Content enthaltenden Dateisegmente und die übrigen von zentraler Stelle (2, 5) empfangenen Dateisegmente von einer auf dem sie empfangenden Endgerät (1) ablaufenden Client-Software zu der auf diesem Endgerät (1) abzuspeichernden DRM-Datei zusammengefügt und im Falle einer späteren erneuten Peer-To-Peer-Übertragung wieder voneinander getrennt werden.

## Beschreibung

Die Erfindung betrifft ein Verfahren zur Online-Distribution digitaler Nutzinhalte, welche durch Digital-Rights-Management (DRM) geschützt sind. Sie bezieht sich insbesondere auf ein Verfahren, mittels welchem entsprechend geschützte Inhalte über Peer-To-Peer-Netzwerke (P2P) im Internet verteilt werden können.

Gefördert durch die zunehmende Verfügbarkeit breitbandiger Übertragungskanäle und zugehöriger Breitbandanschlüsse bei den Nutzern des Internet hat in den letzten Jahren die Verbreitung digitaler Nutzinhalte auf dem Online-Weg beziehungsweise über das Internet eine immense Bedeutung erlangt. Ganz besonders betrifft dies die Verteilung medialer Inhalte und Software. Trotz der allgemeinen Verfügbarkeit von Breitbandtechnologien stellt aber insbesondere eine effiziente Verbreitung medialer Inhalte, im Hinblick auf das große mit ihnen verbundene Datenvolumen, eine nicht unerhebliche Belastung für die dazu genutzten technischen Systeme dar. Dies gilt insbesondere dann, wenn ein populärer medialer Inhalt, beispielsweise ein neuer Film, innerhalb eines kurzen Zeitraums von sehr vielen Nutzern nachgefragt wird. Hierbei treten dann Engpässe bezüglich der zur Verfügung stehenden Übertragungsbandbreite auf oder entsprechende Server von Verteilersystemen mit zentraler Struktur stoßen an ihre technischen Grenzen. Dies führt aus der Sicht der den entsprechenden Nutzinhalt nachfragenden Nutzer zu enormen Performanceeinbußen beziehungsweise langen Downloadzeiten, kann aber im Extremfall auch den oder die Server des Anbieters zum Zusammenbruch bringen.

Unter anderem vor diesem Hintergrund wurden Techniken entwickelt, die in Rede stehenden digitalen Nutzinhalte mittels dezentralisierter Systeme zu verbreiten. Hierbei werden die erforderliche Übertragungsbandbreite quasi auf eine Mehrzahl von Verbindungen aufgeteilt und/oder Ressourcen, wie notwendige Speichervolumina oder Rechenleistung von einer größeren Zahl von Rechnern zur Verfügung gestellt, welche die mit der Verbreitung der Nutzinhalte verbundene rechentechnische Belastung unter sich aufteilen. Die entsprechenden Rechner bilden so genannte Peer-To-Peer-Netzwerke, welche im Allgemeinen als ein loser und jeweils nur temporär bestehender Rechnerverbund ausgebildet sind. Für die Verteilung der digitalen Nutzinhalte über Peer-To-Peer-Netzwerke sind unterschiedliche Lösungsprinzipien bekannt geworden. Unter anderem hat das so genannte Bit-Strom- oder -Schwall-Prinzip (engl. Strom, Schwall = Torrent) eine größere Bedeutung erlangt. Die jeweiligen Nutzinhalte werden dabei von den sie nachfragenden Nutzern nicht mehr von einem zentralen Server bezogen, sondern untereinander ausgetauscht.

Der Austausch ist derart gestaltet, dass der Computer beziehungsweise ein anderes internetfähiges Gerät eines einen digitalen Nutzinhalt beziehenden Nutzers gegebenenfalls bereits nach dem Empfang nur eines Teils des betreffenden Nutzinhaltes den entsprechenden Teil seinerseits durch einen Upload unmittelbar wieder zum Download für andere Nutzer zur Verfügung stellt. Der Datenaustausch wird dabei im Allgemeinen durch eine auf einem Server laufende Software, einen so genannten Tracker, organisiert. Bei diesem Tracker laufen die Informationen dazu zusammen, bei welchem der dezentralen Rechner (Peers) die jeweiligen Dateien beziehungsweise deren Teile zum jeweiligen Zeitpunkt bezogen werden können. Zur Identifikation eines jeweiligen Nutzinhalts wird über eine auf ihn verweisende Metainformation oder deren Teile ein Hash-Wert gebildet, über welchen von dem Tracker die Informationen zu den für einen Download von Segmenten des gewünschten Nutzinhaltes jeweils zur Verfügung stehenden Quellen (Peers) verfügbar gemacht werden. Die zu einem Nutzinhalt beziehungsweise einer ihn enthaltenden Datei gehörenden Teile beziehungsweise Segmente werden dabei durch den Vergleich jeweils einer Prüfsumme verifiziert. Ein vergleichbares Verfahren wird beispielsweise durch die DE 10 2005 010 131 A1 beschrieben.

Der Einsatz von Peer-To-Peer-Netzwerken hat aber auch dazu geführt, dass mit Hilfe des vorstehend erläuterten Prinzips oder vergleichbarer Mechanismen mediale Inhalte und Software teilweise unter Missachtung von Urheber- und Inhaberrechten verteilt werden. Um urheberrechtlich geschützte Nutzinhalte über elektronische Medien, insbesondere das Internet, verteilen zu können, wurden daher von den Distributoren so genannte Digital-Rights-Management-Systeme entwickelt. Hierbei wird der jeweilige digitale Nutzinhalt durch eine zur Rechteverwertung berechtigte Instanz (Rechteverwerter) verschlüsselt und seine Nutzung an eine Lizenz gekoppelt, wobei außerdem an den Nutzinhalt Rechte-Kennzeichen gebunden sind, welche Angaben zum Rechteverwerter enthalten und/oder in welchen festgelegt ist, gemäß welchen Bedingungen, das heißt in welcher Weise der Nutzinhalt von einem Erwerber verwendet werden kann. Nach dem Bezug der Lizenz, welche der Nutzer im Zusammenhang mit einem rechtmäßigen Erwerb des Nutzinhalts bezieht, ermöglicht der an die Lizenz gebundene Schlüssel dem Nutzer die Entschlüsselung des Nutzinhalts und dessen Verwendung entsprechend den dazu in den Rechte-Kennzeichen und/oder der Lizenz festgelegten Bedingungen. Da die Rechte-Kennzeichen aber für verschiedene, voneinander unabhängig einen Nutzinhalt erwerbende Benutzer sehr unterschiedlich gestaltet sein können, hat ihre Verknüpfung mit dem Nutzinhalt in einer gemeinsamen DRM-Datei zur Folge, dass Segmente einer solchen Datei, wie sie zum Beispiel bei Nutzung des Bit-Strom-Prinzips und der Verteilung über ein Peer-To-Peer-Netzwerk gebildet werden, hinsichtlich ihrer (im Allgemeinen ebenfalls durch Hash-Wertbildung ermittelten) Prüfsummen nicht mehr miteinander vergleichbar sind. Nach dem Stand der Technik ist daher eine Peer-To-Peer-Verteilung DRM-geschützter Inhalte zumindest unter Einsatz des Bit-Strom-Prinzips nicht möglich.

In der US 2004/0030651A1 wird ein Verfahren beschrieben, bei welchem urheberrechtlich geschützte Inhalte Peer-To-Peer übertragen werden. Dies wird dadurch ermöglicht, dass jeweils immer der gesamte Inhalt von einem in dessen Besitz befindlichen Netzwerkteilnehmer auf das Endgerät eines den Inhalt anfordernden Netzwerkteilnehmers übertragen wird. Dabei ist gemäß dem Verfahren sichergestellt, dass der jeweilige Empfänger des Inhalts eine Zahlung leisten muss, von welcher ein Teil als Belohnung dem jeweiligen Versender des Inhalts zufließt. Nachteilig hieran ist, dass die Upload-Rate, also die Übertragungsrate des Endgeräts eines den Inhalt versendenden gewöhnlichen Peer-To-Peer-Teilnehmers wesentlich geringer ist, als die professioneller Server und mithin für voluminöse Inhalten, wie etwa Spielfilme, sehr lange Übertragungszeiten entstehen.

Aufgabe der Erfindung ist es, eine Lösung anzugeben, welche es ermöglicht, DRM-geschützte Nutzinhalte komfortabel über Peer-To-Peer-Netzwerke, vorzugsweise auch unter Nutzung von Techniken wie der des Bit-Strom-Prinzips, zu verbreiten.

Die Aufgabe wird durch ein Verfahren mit den Merkmalen des Hauptanspruchs gelöst. Vorteilhafte Aus- beziehungsweise Weiterbildungen der Erfindung sind durch die Unteransprüche gegeben.

Nach dem zur Lösung der Aufgabe vorgeschlagenen Verfahren zur Online-Distribution digitalisierter, einem digitalen Management der Rechte für ihre Nutzung unterliegender Nutzinhalte (im Weiteren Content) werden ein entsprechender Content und Angaben zum Rechteverwerter enthaltende und/oder im Rahmen des digitalen Rechtemanagements die Bedingungen der Nutzung dieses Content vorgegebene Rechte-Kennzeichen über ein Netzwerk mit einer Mehrzahl netzwerkfähiger Endgeräte und mindestens einem Server auf ein Endgerät eines den Content anfordernden Nutzers übertragen. Der eigentliche Content wird dabei in verschlüsselter Form übertragen. Auf dem Endgerät des anfordernden Nutzers werden der Content und die zugehörigen Rechte-Kennzeichen für die spätere Nutzung des Content in Form einer zumindest den verschlüsselten Content und die Rechte-Kennzeichen enthaltenden, (durch den Nutzer) nicht manipulierbaren DRM-Datei abgespeichert. Dabei kann die spätere Nutzung des betreffenden Content entweder unmittelbar mit dem ihn abspeichernden, netzwerkfähigen Endgerät oder mit einem anderen dazu ausgebildeten Gerät des Nutzers erfolgen. Bezüglich des letztgenannten Falls ist es beispielsweise denkbar, dass die auf dem empfangenden Endgerät abgespeicherte DRM-Datei über eine Bluetooth-Schnittstelle oder eine andere Schnittstelle zur Nutzung auf ein anderes Gerät des Nutzers, wie etwa ein multimediataugliches Handy beziehungsweise Mobilfunkgerät übertragen wird.

Die vorstehend angesprochenen Rechte-Kennzeichen können sehr unterschiedlich gestaltet sein. Ihr Inhalt und ihr Format hängen von dem durch den jeweiligen Rechteverwerter verwendeten DRM-Verfahren ab. Wie bereits erwähnt, können die Rechte-Kennzeichen diverse Angaben zum Rechteverwerter beinhalten und darüber hinaus Angaben, durch welche festgelegt wird, in welcher Weise und unter welchen Bedingungen ein Content genutzt werden kann. Letzteres, nämlich die Nutzungsbedingungen können aber auch durch Teile der Rechte-Kennzeichen und die zur Nutzung des Content zu erwerbende Lizenz gemeinsam festgelegt werden. Nach diesem Verständnis hat der Begriff Lizenz einerseits einen rechtlichen Bedeutungsgehalt, bezeichnet und beinhaltet aber andererseits auch rein technische Sachverhalte wie die Schlüssel zur Entschlüsselung des Content und gegebenenfalls technische, mit den Rechte-Kennzeichen zusammenwirkende Mittel. Bei diesen technischen Mitteln handelt es sich beispielsweise um Steuerkennzeichen, welche bei der Nutzung eines Content unter der jeweiligen Lizenz die Möglichkeiten dieser Nutzung unmittelbar technisch beeinflussen beziehungsweise gegebenenfalls auch beschränken. Im Einzelfalle können auch die technischen Merkmale der Lizenz nach ihrer Aktivierung auf einem Gerät für die Nutzung eines Content derart mit den Rechte-Kennzeichen zusammengeführt sein, dass die ursprünglichen Rechte-Kennzeichen durch die aktivierte Lizenz verändert werden und/oder die Rechte-Kennzeichen und die Lizenz auf Dateibasis nicht mehr eindeutig voneinander unterscheidbar sind und dann im Sinne des beschriebenen Verfahrens gemeinsam als Rechte-Kennzeichen anzusehen sind.

Jede verfahrensgemäße DRM-Datei umfasst mindestens ein Dateisegment mit mindestens einem Teil des Content, wobei gegebenenfalls ein Content mit geringem Datenvolumen auch in nur einem entsprechenden Dateisegment vollständig enthalten sein kann. Jedes derartige, den Content oder einen Teil davon enthaltende Dateisegment ist außerdem identisch mit denselben Teil des Content enthaltenden Dateisegmenten anderer verfahrensgemäßer DRM-Dateien, sofern der betreffende, in den Dateisegmenten enthaltene Content von demselben Rechteverwerter verschlüsselt wurde. Hingegen können und werden in der Regel die übrigen Bestandteile der DRM-Datei, so insbesondere die Rechte-Kennzeichen und eventuell weitere Dateibestandteile verschiedener DRM-Dateien mit ansonsten identischem Content voneinander abweichen.

Erfindungsgemäß ist das Verfahren so gestaltet, dass die, bezogen auf die Distribution eines gleichen Content innerhalb verschiedener DRM-Dateien jeweils identischen Dateisegmente, gesteuert durch einen Server, zwischen den Endgeräten der Netzwerkteilnehmer Peer-To-Peer ausgetauscht werden. Die übrigen voneinander abweichenden Bestandteile einer DRM-Datei, insbesondere die Rechte-Kennzeichen, werden hingegen von zentraler Stelle, das heißt von einem Endgerät eines bestimmten Netzwerkteilnehmers oder von einem Server des Netzwerks, auf das Endgerät eines einen Content anfordernden Nutzers übertragen. Erfindungsgemäß werden ferner die den Content enthaltenden Dateisegmente und die übrigen von zentraler Stelle empfangenen Dateisegmente von einer auf dem sie empfangenden Endgerät ablaufenden Client-Software zu der auf diesem Endgerät abzuspeichernden DRM-Datei zusammengefügt. Durch diese Client-Software werden außerdem die den Content enthaltenden Dateisegmente und die übrigen, insbesondere die Rechte-Kennzeichen enthaltenden Dateibestandteile im Falle einer späteren erneuten Peer-To-Peer-Übertragung von Content enthaltenden Dateisegmenten an ein Endgerät eines anderen, den betreffenden Content anfordernden Nutzers, bei welcher der ursprüngliche Empfänger des Inhalts als Bereitsteller beziehungsweise Uploader auftritt, zum Zweck dieser Übertragung wieder voneinander getrennt. Der Erfindung liegt also die Überlegung zugrunde, die jeweils identischen Teile von gleichen Nutzinhalt tragenden DRM-Dateien unter Nutzung bekannter Peer-To-Peer-Techniken über das Netzwerk zu verbreiten, aber hingegen die nicht konstanten, das heißt die sich von Distributionsvorgang zu Distributionsvorgang jeweils ändernden Teile der DRM-Dateien, wie insbesondere die Rechte-Kennzeichen, an zentraler Stelle für den Bezug bereitzustellen. Bei dieser zentralen Stelle kann es sich um das Endgerät eines ganz bestimmten Netzwerkteilnehmers oder den Server eines Contentvermittlers handeln.

Entsprechend einer bevorzugten Ausbildungsform der Erfindung ist das Verfahren so gestaltet, dass Content enthaltende Dateisegmente von einem sie empfangenden Endgerät eines den betreffenden Content anfordernden Nutzers unmittelbar nach ihrem Empfang bereits wieder zur Übertragung an andere, den selben Content anfordernde Endgeräte bereitgestellt werden. Dies entspricht der Vorgehensweise bekannter Peer-To-Peer-Verfahren, wie beispielsweise des Bit-Strom-Verfahrens.

Insbesondere im Hinblick auf das letztgenannte Peer-To-Peer-Übertragungsprinzip ist das Verfahren entsprechend einer vorteilhaften Ausbildungsform so gestaltet, dass die Peer-To-Peer-Übertragung der Dateisegmente mit dem Content durch eine auf einem Server des Netzwerks ablaufende Software gesteuert wird und dabei jedes Dateisegment eines Content anhand einer Prüfsumme identifizierbar und diesem Content durch einen über eine erste Metainformation gebildeten, den Content insgesamt identifizierenden Hash-Wert zuordenbar ist. Diese erste Metainformation enthält Angaben, wie die Prüfsummen der zum Content gehörenden Dateisegmente, den Namen und die Größe der aus diesen Dateisegmenten des betreffenden Content bestehenden Datei sowie die Netzwerkadresse des die Peer-To-Peer-Verteilung mit Hilfe des Hash-Werts und der Prüfsummen der Dateisegmente steuernden Servers. Dabei wird die vorgenannte erste Metainformation von einem den Content anfordernden Endgerät mittels der dazu auf ihm ablaufenden Client-Software aus einer zweiten Metainformation extrahiert, welche das den Content anfordernde Gerät zuvor von einem Server oder einem Endgerät eines den Content vermittelnden oder ihn empfehlenden Netzwerkteilnehmers bezogen hat. Diese zweite Metainformation enthält vorzugsweise Angaben zur Art des Content. Sie kann gegebenenfalls außerdem eine Content-ID oder Angaben zur Ableitung eines Identifikators enthalten, welcher den späteren Bezug einer Lizenz sowie eines an diese gebundenen Schlüssels zur Entschlüsselung des Content ermöglicht. Gemäß einer Variante dieser Ausbildungsform können außerdem die Rechte-Kennzeichen Bestandteil dieser zweiten Metainformation sein, während die Rechte-Kennzeichen entsprechend einer anderen Variante unter Nutzung des bereits genannten, den Content identifizierenden Hash-Wertes von einem Server oder einem Endgerät des Netzwerks beziehbar sind.

Gemäß einer vorteilhaften Weiterbildung des erfindungsgemäßen Verfahrens kann die zuvor angesprochene zweite Metainformation außerdem allgemein, für den Nutzer bestimmte Angaben zur Art des Content enthalten. Hierbei kann es sich beispielsweise um den Titel eines Musikalbums, um eine Titelliste oder um Angaben zum Interpreten handeln. Im Falle dessen, dass es sich bei dem Content beispielsweise um einen Spielfilm handelt, können selbstverständlich auch Angaben zu den mitwirkenden Schauspielern in der besagen Metainformation enthalten sein, welche darüber hinaus weitere den beziehungsweise die Content-Erwerber interessierende Angaben enthalten kann.

Wie bereits ausführlich erläutert, werden die den eigentlichen Content enthaltenden Dateisegmente Peer-To-Peer übertragen, das heißt ein den entsprechenden Content anfordernder Nutzer erhält diesen in Form einer Mehrzahl von Dateisegmenten gegebenenfalls von ganz unterschiedlichen anderen Nutzern eines der erfindungsgemäßen Verteilung von Content dienenden Netzwerks. Die jeweils differierenden Informationen werden dagegen von einer zentralen, gegebenenfalls vorher bekannten Stelle bereitgestellt. Letzteres betrifft insbesondere die Rechte-Kennzeichen. Für die Übertragung der Rechte-Kennzeichen sind dabei unterschiedliche Verfahrensvarianten denkbar. Gemäß einer vorgesehenen Verfahrensvariante gestaltet sich der Verfahrensablauf wie folgt:
a) Ein Nutzer wählt den von ihm gewünschten Content mittels eines netzwerkfähigen Endgeräts bei einem diesen Content vermittelnden Server des Netzwerks aus. Im Zusammenhang damit oder bereits zuvor wird auf dem Endgerät des Nutzers eine spezielle Client-Software gestartet.
b) Aufgrund der Auswahl eines Content durch den Nutzer wird von dem unter a) genannten Server auf das Endgerät des Nutzers eine Datei übertragen, welche die erste zum Download des betreffenden Content benötigte Metainformation und die zweite für das Rechte-Management benötigte Metainformation, nicht jedoch die Rechte-Kennzeichen enthält.
c) Durch die Client-Software des die Datei mit den Metainformationen empfangenden Endgeräts des Nutzers wird aus der Datei die erste, für den Download des Content benötigte Metainformation mit den Prüfsummen der zum Content gehörenden Dateisegmente, dem Namen und der Größe der aus den Dateisegmenten des betreffenden Content bestehenden Datei und der Netzwerkadresse des die Peer-To-Peer-Verteilung steuernden Servers extrahiert und über diese erste Metainformation oder Teile davon der den Content identifizierende Hash-Wert gebildet.
d) Der Hash-Wert wird von der Client-Software des den Content anfordernden Endgeräts an den unter c) genannten, die Peer-To-Peer-Verteilung mit Hilfe des Hash-Werts und der Prüfsummen der Dateisegmente steuernden Server mit der in der ersten Metainformation enthaltenen Netzwerkadresse übertragen.
e) Gesteuert von dem den Hash-Wert empfangenden Server wird der Content, in Form von Endgeräten anderer Netzwerkteilnehmer direkt zu dem den Content anfordernden Endgerät des Nutzers übermittelter Dateisegmente, Peer-To-Peer übertragen. Nach dem vollständigen Empfang des Content durch dieses Endgerät werden, gesteuert durch die auf dem Endgerät ablaufende Client-Software, mittels des aus der ersten Metainformation gebildeten Hash-Wertes, von dem den Content vermittelnden Server die Rechte-Kennzeichen bezogen. Der Erwerb der die Nutzung des Content ermöglichenden Lizenz mit dem zugehörigen, zur Entschlüsselung des Content erforderlichen Schlüssel ist dann ein üblicher Kaufvorgang. Dabei kann die Lizenz unter Verwendung einer in der zweiten Metainformation enthaltenen Content-ID oder eines aus dieser Metainformation abgeleiteten Identifikators bei jedem dies ermöglichenden, vorzugsweise durch einen speziellen Shop unterhaltenen Server bezogen werden.

Bei der vorgenannten ersten Variante des Verfahrens muss der einen Content ursprünglich für die Distribution zur Verfügung stellende Netzwerkteilnehmer beziehungsweise der Rechteverwerter, weder identisch sein mit dem Betreiber des diesen Content vermittelnden Servers, noch mit dem Betreiber des Shops zum Erwerb der Lizenz, wobei jedoch die Auswahl des Content und der Shop zum Erwerb der Lizenz gegebenenfalls auch auf einem gemeinsamen Server realisiert sein können. Bei dem einen Content ursprünglich zur Verfügung stellenden Netzwerkteilnehmer beziehungsweise dem Rechteverwerter kann es sich um einen Netzwerkteilnehmer handeln, welcher gegebenenfalls im Zusammenhang mit einem anderen Content als Nutzer dieses anderen, in diesem Falle von ihm über das Netzwerk bezogenen Content auftritt. Dabei ist das Verfahren so gestaltet, dass die auf dem netzwerkfähigen Endgerät eines einen Content einstellenden Netzwerkteilnehmers ablaufende Client-Software einen Content, welcher erstmalig in das Netzwerk eingestellt wird, zusammen mit von dieser Software generierten Rechte-Kennzeichen an den den Content vermittelnden Server überträgt. Anhand der Rechte-Kennzeichen ist der den Content vermittelnde Netzwerkteilnehmer identifizierbar und kann gegebenenfalls für seine Mitwirkung beim Vertrieb von Nutzinhalten belohnt beziehungsweise honoriert werden.

Gemäß einer zweiten Verfahrensvariante wird ein Teilnehmer des Netzwerks durch einen anderen Netzwerkteilnehmer auf einen bestimmten Content durch eine Empfehlung aufmerksam gemacht. Hierzu übermittelt das Endgerät des Empfehlenden eine wiederum aus der ersten und der zweiten Metainformation bestehende Datei an das Endgerät des Empfehlungsempfängers. Bestandteil dieser Datei, genauer gesagt der zweiten Metainformation, sind in diesem Falle jedoch auch die Rechte-Kennzeichen für den betreffenden Inhalt. Der Bezug des eigentlichen Content durch den die Empfehlung empfangenden Netzwerkteilnehmer erfolgt dann in analoger Weise zu der ersten Verfahrensvariante. Das heißt, durch die auf seinem Endgerät ablaufende Client-Software wird aus der im Zuge der Empfehlung von dem anderen Netzwerkteilnehmer erhaltenen Datei die erste, dem Management der Peer-To-Peer-Verteilung des eigentlichen Content dienende erste Metainformation extrahiert und aus dieser ein Hash-Wert gebildet. Dieser Hash-Wert wird dann an den die Peer-To-Peer-Verteilung steuernden Server, dessen Netzwerkadresse wiederum in der Metainformation enthalten ist, übermittelt. Gesteuert von dem Server erfolgt die Verteilung des eigentlichen Content Peer-To-Peer, wobei die Rechte-Kennzeichen in diesem Falle bereits bei dem den Content anfordernden Netzwerkteilnehmer vorliegen und mit dem empfangenen Content gemeinsam als DRM-Datei abgespeichert werden. Der Nutzer muss nun nach dem vollständigen Download des Content lediglich noch die Lizenz mit dem Schlüssel zur Nutzung des Content erwerben. Im Zuge dieses Erwerbs werden in diesem Falle in der zweiten Metainformation mit enthaltene Angaben zu dem Netzwerkteilnehmer, welcher den Content empfohlen hat, an den die Lizenz verkaufenden Shop übertragen, so dass der empfehlende Teilnehmer wiederum für seine Teilnahme an der Verteilung beziehungsweise Vermarktung des Content belohnt werden kann. Im Hinblick auf die Belohnung von die Distribution unterstützenden Netzwerkteilnehmern ist aber, unabhängig davon, ob die Rechte-Kennzeichen gemäß der ersten Verfahrensvariante von einem Server zur Verfügung gestellt oder gemäß der zweiten Variante durch einen anderen Netzwerkteilnehmer übertragen werden, eine weitere Variante möglich. Hierbei wird im Zusammenhang mit dem Bezug eines Content durch einen diesen anfordernden Nutzer von dem die Peer-To-Peer-Übertragung steuernden Server registriert, wie viele der, jeweils Teile des Content enthaltenden Dateisegmente von einzelnen Netzwerkteilnehmern im Wege des Upload zum Download für den den Content anfordernden Teilnehmer zur Verfügung gestellt werden. Der Netzwerkteilnehmer mit dem höchsten Upload-Volumen kann dann wiederum entsprechend belohnt werden.

Aus den vorstehenden Erläuterungen ist zu entnehmen, dass es erforderlich ist, die den Content enthaltenden und für identische Contentteile jeweils identischen Dateisegmente von den anderen Bestandteilen der DRM-Dateien zu unterscheiden, um sie von den veränderlichen Dateiteilen trennen zu können. Auch diesbezüglich sind unterschiedliche Ausbildungsformen des erfindungsgemäßen Verfahrens denkbar. Sofern das Format der DRM-Dateien bekannt ist, können die den Content enthaltenden, für denselben Content jeweils identischen Dateisegmente mit Hilfe der Formateigenschaften des betreffenden DRM-Formats und/oder diesem Format immanenter Informationen innerhalb der DRM-Datei lokalisiert und aus dieser extrahiert werden. Gemäß einer insoweit möglichen Ausbildungsform weisen die einzelnen Dateibestandteile, also die veränderlichen Dateibestandteile einerseits und die im Falle identischen Contents jeweils gleichen Dateibestandteile (Dateisegmente) andererseits, ein den jeweiligen Dateiabschnitt einleitendes Kennzeichen auf, oder es handelt sich bei ihnen um Blöcke fester Länge. Ferner können Verweise auf die den Content enthaltenden Dateiteile in der zweiten Metainformation enthalten sein und die entsprechenden Dateiteile beziehungsweise Dateisegmente mit dem Content mittels dieser Verweise innerhalb der DRM-Datei lokalisiert werden. Denkbar ist es aber auch, dass auf dem die Peer-To-Peer-Übertragung der den Content enthaltenden Dateisegmente steuernden Server für einen jeweiligen Content eine Referenzcheckliste mit den Prüfsummen der den Content enthaltenden Dateisegmente zum Vergleich hinterlegt ist. Die in einer jeweiligen DRM-Datei enthaltenen Dateisegmente mit dem Content können dabei durch Vergleich mit der Referenzcheckliste des Servers von der auf dem Endgerät eines Netzwerkteilnehmers ablaufenden Client-Software aus der DRM-Datei extrahiert werden. Eine Nutzung des Verfahrens für unterschiedliche, zunächst unbekannte DRM-Spezifikationen kann auch dadurch bewerkstelligt werden, dass zu den jeweiligen Spezifikationen jeweils eine Referenzdatei auf dem den Content vermittelnden Server hinterlegt wird. Eine von der Client-Software des Endgerätes eines Netzwerkteilnehmers zu bearbeitende, hinsichtlich ihrer Spezifikation unbekannte DRM-Datei kann dabei durch einen so genannten Longest-Common-Substring-Algorithmus mit den Referenzdateien des Servers verglichen werden und dabei zunächst die Spezifikation der vorliegenden DRM-Datei ermittelt und anschließend die den Content enthaltenden Dateisegmente aus dieser extrahiert werden.

Neben dem zuvor dargestellten Verfahren ist ein weiterer Gegenstand der Erfindung ein Computerprogrammprodukt zu dessen Ausführung. Es handelt sich hierbei um einen Datenträger mit einer darauf gespeicherten Client-Software, welche es ermöglicht, zum Download eines digitalisierten, einem digitalen Management der Rechte für seine Nutzung unterliegenden Content, Teile dieses Content enthaltende Dateisegmente über ein Peer-To-Peer-Netzwerk und

Angaben zum Rechteverwerter enthaltende und/oder die Bedingungen der Nutzung des betreffenden Content vorgebende Rechte-Kennzeichen von einer zentralen Stelle des Netzwerks zu empfangen sowie die vorgenannten Dateisegmente mit den Contentteilen und die Rechte-Kennzeichen (vorzugsweise manipulationssicher) zu einer DRM-Datei zusammenzufügen, wenn diese Client-Software in den Arbeitsspeicher eines netzwerkfähigen Endgerätes mit einer Programmverarbeitungseinheit geladen ist.

Dieses erfindungsgemäße Computerprogrammprodukt ist dadurch weitergebildet, dass die auf dem Datenträger gespeicherte Client-Software, sofern eine Lizenz mit einem zugehörigen Schlüssel zur Nutzung des Content dessen Entschlüsselung zulässt, auch die bestimmungsgemäße Nutzung des Content, also beispielsweise das Abspielen einer MP3-Datei ermöglicht. Unabhängig davon, ob das erfindungsgemäße Computerprogrammprodukt auch zur eigentlichen Nutzung des Content oder aber nur zu dessen Download ausgebildet ist, kann das Computerprogrammprodukt dadurch weitergebildet sein, dass die auf dem Datenträger gespeicherte Software es ermöglicht, die den Content enthaltenden Teile einer DRM-Datei von den Rechte-Kennzeichen zu trennen und die Content enthaltenden Dateisegmente für einen Upload im Zuge einer Peer-To-Peer erfolgenden Datenübertragung zur Verfügung zu stellen sowie gegebenenfalls die Rechte-Kennzeichen auf einen Server des Netzwerkes zu laden oder dieses an einen anderen Netzwerkteilnehmer zu übertragen.

Die Erfindung soll nachfolgend anhand eines Ausführungsbeispiels beziehungsweise von Zeichnungen nochmals näher verdeutlicht werden. In den zugehörigen Zeichnungen zeigen:
- Fig. 1a:: Ein grobes Schema für eine mögliche Struktur einer DRM-Datei
- Fig. 1b:: Die DRM-Datei nach Fig. 1a mit über Segmente der Datei gebildeten Prüfsummen
- Fig. 2:: Ein Schema zur Verdeutlichung der erfindungsgemäßen Übertragungswege
- Fig. 3:: Ein Ablaufschema für den Bezug beziehungsweise Download eines Content
- Fig. 4:: Ein Ablaufschema für die Bereitstellung eines Content zum Download durch andere Netzwerkteilnehmer

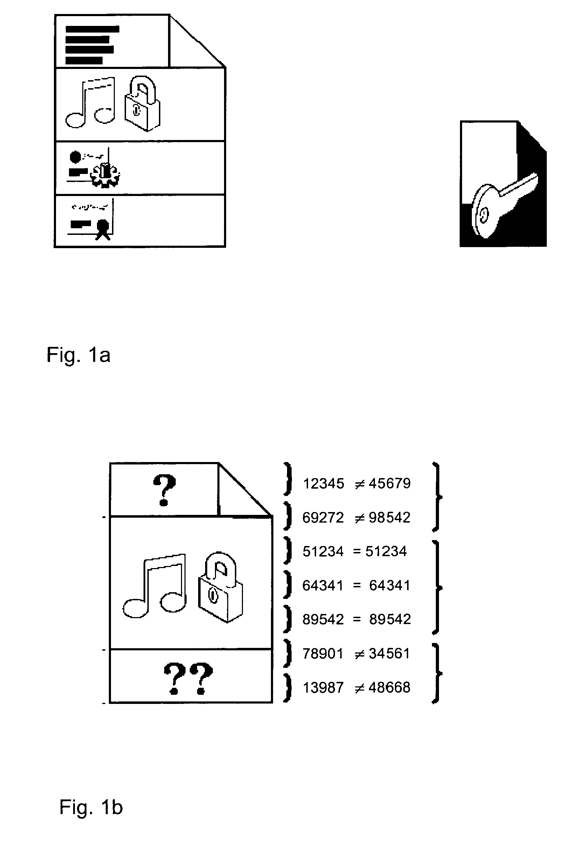

Die Fig. 1a zeigt schematisch eine mögliche Struktur einer verfahrensgemäßen DRM-Datei. Diese besteht aus einem ersten Block mit beispielsweise Informationen zur Art des in ihr enthaltenen Content, aus einem zweiten Block mit dem Nutzinhalt beziehungsweise Content, einem dritten Block mit Rechte-Kennzeichen und einem vierten Block mit einer elektronischen Signatur des Contentherausgebers. Der erste, die Informationen zum Content enthaltende Block wird üblicherweise auch als Metainformation bezeichnet, wobei im Zusammenhang mit der Erläuterung des Ausführungsbeispiels und im Kontext der Erfindung dieser erste Block, also die eigentliche Metainformation, der die Rechte-Kennzeichen enthaltende dritte Block und der vierte Block mit der Signatur insgesamt als Metainformation bezeichnet werden sollen. Die vorgenannten Blöcke bilden zusammen die Information aus, welche in den Ansprüchen und den vorstehenden Erläuterungen als zweite, für das Rechte-Management benötigte Metainformation bezeichnet wird. Diese zweite Metainformation schließt in der beispielhaft gezeigten Struktur der DRM-Datei den Content ein.

In der Fig. 1b sind über Segmente definierter Größe der in Fig. 1a gezeigten DRM-Datei Prüfsummen gebildet worden. Diese Prüfsummen sind sowohl über die aktuell zu übertragende DRM-Datei als auch eine andere DRM-Datei mit identischem Content, beispielsweise eine Referenzdatei, gebildet worden. Hierbei zeigt sich, dass die Dateisegmente, welche den eigentlichen Content enthalten, für einen identischen Content auch gleiche Prüfsummen aufweisen. Genau diese Dateisegmente werden nach dem erfindungsgemäßen Verfahren Peer-To-Peer (P2P) übertragen, während die anderen Dateibestandteile, das heißt insbesondere die zweite Metainformation mit den Rechte-Kennzeichen, sich hinsichtlich ihrer Prüfsummen unterscheiden und von zentraler Stelle 2, 5 auf das Endgerät 1 eines den Content anfordernden Nutzers übertragen werden.

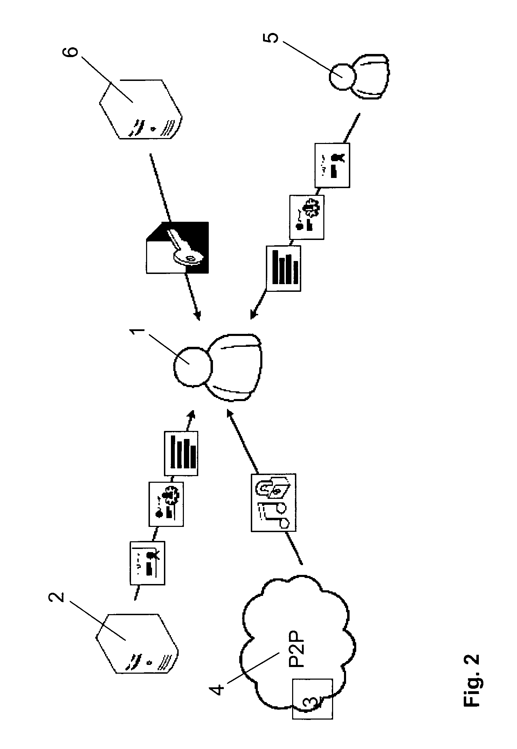

Die vorgenannten Übertragungswege sind in der Fig. 2 nochmals dargestellt. Hier wird durch die mit der Fig. 1a korrespondierende Symbolik erkennbar, dass der Nutzer 1 beziehungsweise dessen Endgerät den verschlüsselten Content über das Peer-To-Peer-Netzwerk (P2P) bezieht, während er die Teile der zweiten Metainformation, insbesondere die Rechte-Kennzeichen, entweder von einem den entsprechenden Content vermittelnden Server 3 oder von einem anderen ihm den Content dabei empfehlenden Nutzer 5 erhält. Auf dem Endgerät 1 des Nutzers werden durch die auf diesem verarbeitete Client-Software, der Peer-To-Peer übertragene Content und die zweite Metainformation wieder als eine gemeinsame DRM-Datei mit einer Struktur, wie sie beispielhaft in der Fig. 1 a wiedergegeben ist, abgespeichert. Beispielsweise über eine in der zweiten Metainformation enthaltene Content-ID oder einen anderen aus ihr ableitbaren Identifikator kann der Nutzer dann bei einem Shop eine Lizenz und einen damit verbundenen Schlüssel erwerben, welcher ihm die Entschlüsselung des empfangenen Content und seine Nutzung ermöglicht. Dabei ist jedoch der Erwerb der Lizenz und des Schlüssels im Grunde völlig unabhängig von dem eigentlichen, der Erfindung zugrunde liegenden Verfahren. Gemäß dem Beispiel erfolgt der Erwerb online bei einem Server beziehungsweise Shop 5. Er kann gegebenenfalls aber auch auf anderem Wege erfolgen. Bei dem in der Figur dargestellten Server 2 kann es sich physikalisch um einen Server handeln, durch welchen einerseits Content vermittelt wird und auf welchem andererseits eine Software abläuft wird, welche den Peer-To-Peer-Download der Dateisegmente eines zu übertragenden Content mit Hilfe des über die erste Metainformation gebildeten Hash-Werts und der Prüfsummen der den Content enthaltenden Dateisegmente steuert. Gegebenenfalls können aber auch, wie im Beispiel, der den Content vermittelnde Server 2 und der dessen Peer-To-Peer-Verteilung steuernde Server 3 physikalisch getrennt sein, wobei dann der die Peer-To-Peer-Übertragung steuernde Server 3 irgendwo in dem als P2P symbolisierten Netzwerk 4 steht beziehungsweise angeordnet ist. Die Peer-To-Peer-Verteilung des Content erfolgt vorzugsweise nach dem schon mehrfach erwähnten Bit-Strom- beziehungsweise Bit-Schwall-Verfahren.

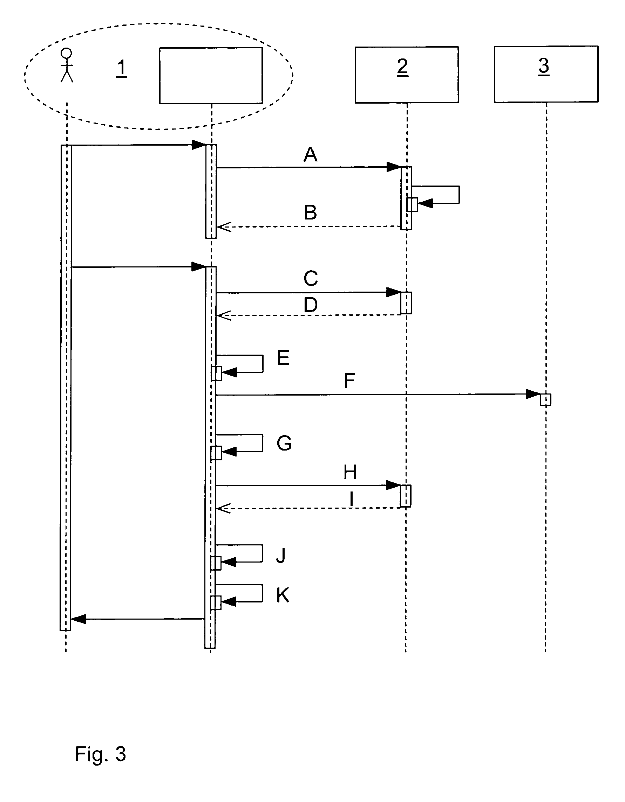

In der Fig. 3 ist beispielhaft ein Ablaufschema für den Download eines Content nach dem erfindungsgemäßen Verfahren unter Nutzung des zuvor genannten Bit-Strom-Prinzips dargestellt. Die Übertragung des Content erfolgt über ein Netzwerk 4, dem unter anderem ein den Content anforderndes Endgerät 1 eines Nutzers mit einer darauf laufenden Client-Software, ein den Content vermittelnder Server 2 und ein Server 3 angehören, welcher die Peer-To-Peer-Verteilung des Content steuert, wobei der letztgenannte Server 3, wie schon erwähnt, auch physikalisch identisch mit dem den Content vermittelnden Server 2 sein kann. Letzterer soll bei der Erläuterung des Ausführungsbeispiels auch als Medianetserver2 bezeichnet werden, während der Server 3 oder die Serverkomponente, mit der die Peer-To-Peer-Übertragung steuernden Software als Tracker bezeichnet werden soll.

Mit Hilfe seines netzwerkfähigen Endgerätes 1 und der darauf ablaufenden Client-Software, in welche vorzugsweise ein Browser als Plugin eingebunden ist, startet ein Nutzer auf dem Medianetserver 2 durch eine entsprechende Anfrage (A) eine Suche nach einem ihn interessierenden Content. Ist er auf einer ihm auf die Anfrage (A) durch den Medianetserver 2 übermittelten Ergebnisliste (B) fündig geworden, wählt er (C) den entsprechenden Content bei dem Medianetserver 2 aus. Daraufhin wird von dem Medianetserver 2 auf sein Endgerät 1 eine aus einer ersten, zur Peer-To-Peer-Übertragung des Content benötigten Metainformation sowie aus einer zweiten, für das Rechte-Management benötigten Metainformation bestehende Datei übertragen (D). Durch die auf dem Endgerät 1 des Nutzers ablaufende Client-Software wird aus dieser Datei die erste Metainformation, welche einen Bezug des eigentlichen Content nach dem bereits erwähnten Bit-Strom-Prinzip ermöglicht, extrahiert (E). Ein aus ihr abgeleiteter Hash-Wert wird an den Tracker übermittelt (F). Gesteuert von dem Tracker 3, auf welchem die Informationen darüber zusammenlaufen, bei welchen der gegenwärtig im Netzwerk 4 befindlichen Endgeräte von Netzwerkteilnehmern einzelne Dateisegmente des entsprechenden Content für eine Übertragung zur Verfügung stehen, erfolgt dann die Peer-To-Peer-Übertragung der den Content bildenden Dateisegmente (G) auf das Endgerät 1 des den Content anfordernden Nutzers. Wenn der Download der Dateisegmente abgeschlossen ist, wird durch die auf diesem Endgerät ablaufende Client-Software überprüft, ob zu dem betreffenden Content bereits Rechte-Kennzeichen auf dem Endgerät 1 des Nutzers vorliegen. Dies könnte beispielsweise der Fall sein, wenn ihm diese Rechte-Kennzeichen im Zuge einer Empfehlung eines anderen Netzwerkteilnehmers 5 von diesem anderen Netzwerkteilnehmer 5 übertragen wurden.

Nach dem zuvor erläuterten Beispiel verfügt das Endgerät 1 beziehungsweise die darauf ablaufende Client-Software des den Content anfordernden Nutzers jedoch noch nicht über die entsprechenden Rechte-Kennzeichen. Sie fordert diese daher unter Verwendung des zu Beginn des Vorgangs aus der ersten Metainformation gebildeten Hash-Wertes bei dem Medianetserver 2 an (H). Die Rechte-Kennzeichen werden durch das Endgerät 1 des Nutzers bezogen (I) und durch die darauf ablaufende Client-Software zusammen mit den zuvor Peer-To-Peer übermittelten Dateisegmenten mit dem Content als DRM-Datei abgespeichert (J). Sofern der Nutzer nun auf einem beliebigen Wege, vorzugsweise ebenfalls online bei einem Server 6, eine Lizenz und damit einen Schlüssel erwirbt, kann er den Content nach seiner Entschlüsselung nach den Vorgaben der Rechte-Kennzeichen benutzen. Der von dem Nutzer empfangene Content steht, unter der Voraussetzung, dass das Endgerät 1 des Nutzers online bleibt und der Nutzer hiermit einverstanden ist, zur Übertragung an andere den Content anfordernde Netzwerkteilnehmer weiterhin zur Verfügung (K).

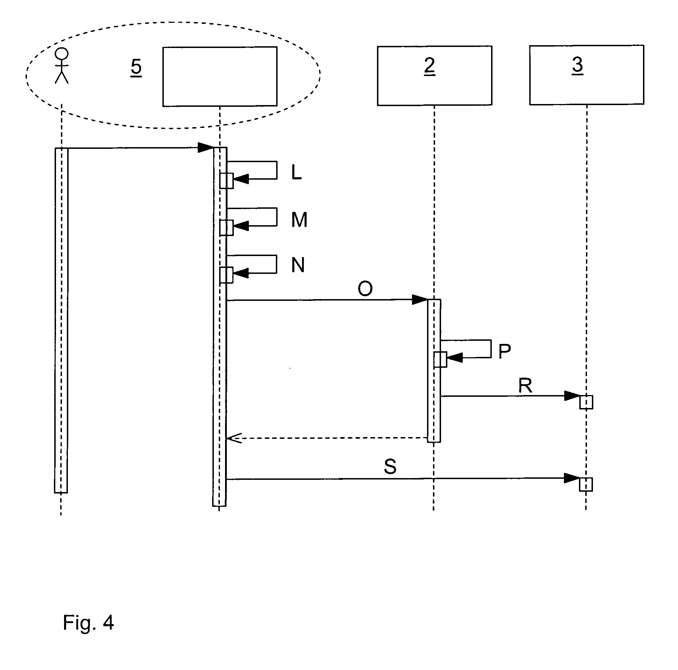

Die Fig. 4 zeigt ein Ablaufschema für die Bereitstellung eines Content durch einen Netzwerkteilnehmer 5. Durch die auf dem Endgerät (5) des betreffenden Netwerkteilnehmers beziehungsweise Nutzers ablaufende Client-Software wird zu dem entsprechenden, von dem Netzwerkteilnehmer (5) ausgewählten (L) Content die erste, für die Peer-To-Peer-Übertragung erforderliche Metainformation generiert (M). Diese wird dann mit der zweiten, ebenfalls durch die Client-Software generierten, auch die Rechte-Kennzeichen enthaltenden zweiten Metainformation zu einer Datei zusammengefügt (N). Die so entstandene Datei wird auf den Medianetserver 2 übertragen (O). Sofern der Medianetserver 2 ermittelt (P), dass es sich bei dem Content um einen erstmals in das Netzwerk 4 eingestellten Content handelt, annonciert er (R) dies unter Übertragung der für die Peer-To-Peer-Übertragung nötigen ersten Metainformation an den Tracker 3. Danach wird eine Verbindung zwischen dem Tracker 3 und dem, den Content zur Verfügung stellenden Endgerät 5 aufgebaut und die Verteilung nach dem Bit-Strom-Prinzip gestartet (S). Sofern nun das Endgerät 1 eines anderen Nutzers von dem den Content ursprünglich einstellenden Endgerät 5 ein erstes Dateisegment des Content bereits empfangen hat, wird dieses Dateisegment von dem Endgerät 1 dieses Nutzers unmittelbar wieder für den Download durch weitere Nutzer zur Verfügung gestellt, wobei dazu durch das Endgerät 1 des betreffenden zweiten Nutzers eine entsprechende Information über den Erhalt des Dateisegments an den Tracker 3 übermittelt wird und dieser die fortgesetzte Peer-To-Peer-Verteilung des Content steuert.

## Patentansprüche

1. Verfahren zur Online-Distribution digitalisierter, einem digitalen Management der Rechte für ihre Nutzung unterliegender Nutzinhalte, nach welchem ein entsprechender, verschlüsselter Nutzinhalt - im Weiteren Content - und zu diesem Content gehörende, jeweils spezifische Rechte-Kennzeichen eines Rechteverwerters, welche Angaben zum Rechteverwerter enthalten und/oder Nutzungsbedingungen für den betreffenden Content vorgeben, über ein Netzwerk (4) mit einer Mehrzahl netzwerkfähiger Endgeräte und mindestens einem Server (2, 3) auf ein Endgerät (1) eines den Content anfordernden Nutzers übertragen werden, wo sie für eine spätere Nutzung des Content, mit dem empfangenden Endgerät (1) oder mit einem anderen dazu ausgebildeten Gerät, als eine zumindest den betreffenden verschlüsselten Content und die Rechte-Kennzeichen enthaltende DRM-Datei abgespeichert werden, wobei jede DRM-Datei mindestens ein Dateisegment mit mindestens einem Teil des Content umfasst und jedes derartige Dateisegment identisch ist mit denselben Teil des Content enthaltenden Dateisegmenten anderer verfahrensgemäßer DRM-Dateien, sofern der betreffende Content jeweils von demselben Rechteverwerter verschlüsselt wurde, **dadurch gekennzeichnet, dass** die, bezogen auf die Distribution eines gleichen Content innerhalb verschiedener DRM-Dateien jeweils identischen Dateisegmente gesteuert durch einen Server zwischen den Endgeräten der Netzwerkteilnehmer Peer-To-Peer ausgetauscht werden, während alle übrigen, für eine jeweilige DRM-Datei spezifischen Bestandteile, einschließlich der Rechte-Kennzeichen, von zentraler Stelle (2, 5), das heißt von einem Server (2) oder von einem Endgerät (5) eines bestimmten anderen Netzwerkteilnehmers auf das Endgerät (1) eines den Content anfordernden Nutzers übertragen werden, wobei die den Content enthaltenden Dateisegmente und die übrigen von zentraler Stelle (2, 5) empfangenen Dateisegmente von einer auf dem sie empfangenden Endgerät (1) ablaufenden Client-Software zu der auf diesem Endgerät (1) abzuspeichernden DRM-Datei zusammengefügt und im Falle einer späteren erneuten Peer-To-Peer-Übertragung von Content enthaltenden Dateisegmenten an ein Endgerät eines anderen, den betreffenden Content anfordernden Nutzers zum Zweck dieser Übertragung wieder voneinander getrennt werden.

2. Verfahren nach Anspruch 1, **dadurch gekennzeichnet, dass** Teile des Content enthaltende Dateisegmente von einem sie empfangenden Endgerät (1) eines den betreffenden Content anfordernden Nutzers unmittelbar nach ihrem Empfang bereits wieder zur Übertragung an andere denselben Content anfordernde Endgeräte bereitgestellt werden.

3. Verfahren nach Anspruch 1 oder 2, **dadurch gekennzeichnet, dass** der Zugriff auf einen Content durch eine ihm zugeordnete erste Metainformation ermöglicht und die Peer-To-Peer-Übertragung der den Content bildenden Dateisegmente durch eine auf einem Server (3) des Netzwerks (4) ablaufende Software gesteuert wird und dass dabei jedes Dateisegment eines Content anhand einer Prüfsumme identifizierbar und diesem Content durch einen über die vorgenannte erste Metainformation oder Teile davon gebildeten, den Content insgesamt identifizierenden Hash-Wert zuordenbar ist, wobei die erste Metainformation die Prüfsummen der zum Content gehörenden Dateisegmente, den Namen und die Größe der aus den Dateisegmenten des betreffenden Content bestehenden Datei sowie die Netzwerkadresse des die Peer-To-Peer-Verteilung mit Hilfe des Hash-Wertes und der Prüfsummen der Dateisegmente steuernden Servers (3) enthält und die erste Metainformation mittels der auf einem den Content anfordernden Endgerät (1) ablaufenden Client-Software aus einer zweiten Metainformation extrahiert wird, welche das den Content anfordernde Endgerät (1) zuvor von einem Server oder einem Endgerät (5) eines den Content vermittelnden Netzwerkteilnehmers bezogen hat und wobei die Rechte-Kennzeichen in der vorgenannten zweiten, auch den Bezug einer Lizenz sowie eines an diese gebundenen Schlüssels zur Entschlüsselung des Content ermöglichenden Metainformation enthalten oder mittels des den Content identifizierenden Hash-Wertes von einem Server (2) oder einem Endgerät des Netzwerks (4) beziehbar sind.

4. Verfahren nach Anspruch 3, **dadurch gekennzeichnet, dass** die zweite Metainformation allgemeine für den Nutzer bestimmte Angaben zur Art des Content enthält.

5. Verfahren nach Anspruch 3 oder 4, **dadurch gekennzeichnet, dass** die Übertragung eines Content und der zugehörigen Rechte-Kennzeichen auf ein Endgerät eines einen Content anfordernden Nutzers erfolgt, indem
a. der Nutzer mittels seines netzwerkfähigen Endgeräts bei einem den Content vermittelnden Server des Netzwerks den betreffenden Content auswählt und dessen Übertragung anfordert, wobei zuvor oder im Zusammenhang damit auf dem Endgerät des Nutzers eine von diesem Endgerät verarbeitete Client-Software gestartet wird,
b. von dem Server auf das Endgerät des Nutzers eine Datei übertragen wird, welche die zweite Metainformation und die darin eingebettete erste, zum Download des Content benötigte Metainformation, jedoch nicht die Rechte-Kennzeichen enthält,
c. durch die Client-Software des die Datei mit den Metainformationen empfangenden Endgeräts aus der Datei die erste, für den Download des Content benötigte Metainformation mit den Prüfsummen der zum Content gehörenden Dateisegmente, dem Namen und der Größe der aus den Dateisegmenten des betreffenden Content bestehenden Datei und der Netzwerkadresse des die Peer-To-Peer-Verteilung der Dateisegmente des Content steuernden Servers extrahiert und über diese erste Metainformation oder Teile davon ein Hash-Wert gebildet wird,
d. von der Client-Software des den Content anfordernden Endgeräts an den Server mit der unter c.) genannten Netzwerkadresse der aus der ersten Metainformation gebildete Hash-Wert übertragen wird,
e. das den Content anfordernde Endgerät, gesteuert durch den den Hash-Wert gemäß d.) empfangenden Server, von Endgeräten anderer Netzwerkteilnehmer den Content in Form Peer-To-Peer übertragener Dateisegmente empfängt,
f. durch die Client-Software des anfordernden Endgeräts festgestellt wird, dass zu dem betreffenden Content keine Rechte-Kennzeichen auf dem Endgerät verfügbar sind,
g. die Client-Software des den Content empfangenden Endgeräts die Rechte-Kennzeichen unter Verwendung des den Content identifizierenden Hash-Wertes bei dem Server anfordert, von welchem auch die Metainformationen bezogen wurden,
h. die Rechte-Kennzeichen von der auf dem sie abfordernden Endgerät ablaufenden Client-Software zusammen mit dem zuvor von dem Endgerät empfangenen Content auf diesem als DRM-Datei abgespeichert werden, deren Content nach dem Erwerb einer Lizenz mit einem zugehörigen Schlüssel und Anwendung dieses Schlüssels auf die DRM-Datei nach den Vorgaben der Rechte-Kennzeichen und/oder der Lizenz nutzbar ist.

6. Verfahren nach Anspruch 3 oder 4, **dadurch gekennzeichnet, dass** die Übertragung eines Content und der zugehörigen Rechte-Kennzeichen auf ein Endgerät des Nutzers erfolgt, indem
a. an das Endgerät dieses Nutzers durch das Endgerät eines anderen, ihm den Inhalt empfehlenden Netzwerkteilnehmers eine Datei übertragen wird, welche die zweite Metainformation und die darin eingebettete erste, zum Download des Content benötigte Metainformation sowie die Rechte-Kennzeichen enthält,
b. durch die Client-Software des die Datei mit den Metainformationen empfangenden Endgeräts aus der Datei die erste, für den Download des Content benötigte Metainformation mit den Prüfsummen der zum Content gehörenden Dateisegmente, dem Namen und der Größe der aus den Dateisegmenten des betreffenden Content bestehenden Datei und der Netzwerkadresse des die Peer-To-Peer-Verteilung der Dateisegmente des Content steuernden Servers extrahiert und über diese erste Metainformation oder Teile davon ein Hash-Wert gebildet wird,
c. von der Client-Software des den Content anfordernden Endgeräts an den Server mit der unter b.) genannten Netzwerkadresse der aus der ersten Metainformation gebildete Hash-Wert übertragen wird,
d. das den Content anfordernde Endgerät, gesteuert durch den den Hash-Wert gemäß c.) empfangenden Server, von Endgeräten anderer Netzwerkteilnehmer den Content in Form Peer-To-Peer übertragener Dateisegmente empfängt,
e. der Content auf dem empfangenden Endgerät durch die auf diesem Endgerät ablaufende Client-Software zusammen mit der zuvor von ihm empfangenen zweiten Metainformation als DRM-Datei abspeichert wird, deren Inhalt nach dem Erwerb einer Lizenz mit einem zugehörigen Schlüssel und Anwendung dieses Schlüssels auf die DRM-Datei nach den Vorgaben der Rechte-Kennzeichen und/oder der Lizenz nutzbar ist.

7. Verfahren nach Anspruch 1 bis 6, **dadurch gekennzeichnet, dass** das Format der DRM-Dateien bekannt ist und die den Content enthaltenden, für denselben Content jeweils identischen Dateisegmente mit Hilfe der Formateigenschaften des betreffenden DRM-Formats und/oder diesem Format immanenter Informationen innerhalb der DRM-Datei lokalisierbar und aus dieser extrahierbar sind.

8. Verfahren nach Anspruch 7, **dadurch gekennzeichnet, dass** die den Content enthaltenden, für denselben Content jeweils identischen Dateisegmente innerhalb der DRM-Datei nach einem Block fester Länge beginnen, welcher zumindest Teile der zweiten Metainformation enthält und die Dateisegmente mit dem Content ebenfalls einen Block fester und bekannter Länge ausbilden und somit innerhalb der DRM-Datei lokalisierbar und aus dieser extrahierbar sind.

9. Verfahren nach Anspruch 7, **dadurch gekennzeichnet, dass** die den Content enthaltenden, für denselben Content jeweils identischen Dateisegmente innerhalb der DRM-Datei durch ein Beginn- und ein Ende-Zeichen eingeschlossen und somit innerhalb der DRM-Datei lokalisierbar und aus dieser extrahierbar sind.

10. Verfahren nach Anspruch 7, **dadurch gekennzeichnet, dass** die den Content enthaltenden, für denselben Content jeweils identischen Dateisegmente mittels in der zweiten Metainformation enthaltener Verweise innerhalb der DRM-Datei lokalisierbar und aus dieser extrahierbar sind.

11. Verfahren nach einem der Ansprüche 1 bis 6, **dadurch gekennzeichnet, dass** auf dem die Peer-To-Peer-Übertragung steuernden Server für den jeweiligen Content eine Referenzliste mit den Prüfsummen der den Content enthaltenden Dateisegmente abgelegt und die den Content enthaltenden Teile innerhalb einer DRM-Datei durch einen Vergleich mit dieser Prüfliste lokalisierbar und aus dieser extrahierbar sind.

12. Verfahren nach einem der Ansprüche 1 bis 6, **dadurch gekennzeichnet, dass** auf dem den Content vermittelnden Endgerät oder Server des Netzwerks für den betreffenden Content eine Referenzdatei gespeichert ist und durch einen Vergleich mit dieser Referenzdatei nach einem Longest Common Substring-Algorithmus die den Content enthaltenden Teile innerhalb einer auf einem anderen Endgerät gespeicherten DRM-Datei lokalisierbar und aus dieser extrahierbar sind.

13. Verfahren nach einem der Ansprüche 1 bis 12, **dadurch gekennzeichnet, dass** von dem die Peer-To-Peer-Übertragung steuernden Server registriert wird, wie viele Teile des Content enthaltende Dateisegmente von einzelnen Netzwerkteilnehmern im Wege des Upload zum Download für einen diesen Content anfordernden Netzwerkteilnehmer zur Verfügung gestellt werden.

14. Computerprogrammprodukt, nämlich Datenträger mit einer darauf gespeicherten Client-Software, welche es zur Durchführung des Verfahrens nach Anspruch 1 ermöglicht, zum Download eines digitalisierten, einem digitalen Management der Rechte für seine Nutzung unterliegenden Content, verschlüsselte Teile dieses Content enthaltende Dateisegmente über ein Peer-To-Peer-Netzwerk und Angaben zum Rechteverwerter enthalte und/oder Nutzungsbedingungen für den betreffenden Content vorgebende Rechte-Kennzeichen von einer zentralen Stelle des Netzwerks, nämlich von einem Server oder von einem Endgerät eines bestimmten anderen Netzwerkteilnehmers, zu empfangen sowie die vorgenannten Dateisegmente mit den Content-Teilen und die Rechte-Kennzeichen zu einer DRM-Datei zusammenzufügen, wenn die Client-Software in den Arbeitsspeicher eines netzwerkfähigen Endgeräts mit einer Programmverarbeitungseinheit geladen ist.

15. Computerprogrammprodukt nach Anspruch 14, **dadurch gekennzeichnet, dass** die auf dem Datenträger gespeicherte Client-Software auch die Entschlüsselung der den Content enthaltenden Dateisegmente und dessen bestimmungsgemäße Nutzung ermöglicht, sofern hierfür eine Lizenz und ein mit dieser verbundener Schlüssel zur Verfügung stehen und die Client-Software in den Arbeitsspeicher des netzwerkfähigen Endgeräts mit der Programmverarbeitungseinheit geladen ist.

16. Computerprogrammprodukt nach Anspruch 15, dass die auf dem Datenträger gespeicherte Client-Software nach der Entschlüsselung des Content die Wiedergabe eines den Content ausbildenden Media-Datenstroms ermöglicht wenn die Client-Software in den Arbeitsspeicher des netzwerkfähigen Endgeräts mit der Programmverarbeitungseinheit geladen ist.

17. Computerprogrammprodukt nach einem der Ansprüche 14 bis 16, **dadurch gekennzeichnet, dass** die auf dem Datenträger gespeicherte Software es ermöglicht, von dem netzwerkfähigen Endgerät mit der Programmverarbeitungseinheit empfangene, Content enthaltende Dateisegmente nach dem Empfang unmittelbar wieder in das Peer-To-Peer-Netzwerk upzuloaden, wenn die Client-Software in den Arbeitsspeicher des Endgeräts geladen ist.

18. Computerprogrammprodukt, nämlich Datenträger mit einer darauf gespeicherten Client-Software, welche es zur Durchführung des Verfahrens nach Anspruch 1 ermöglicht, zum Upload eines digitalisierten, einem digitalen Management der Rechte für seine Nutzung unterliegenden Content, Teile dieses Content enthaltende Dateisegmente aus einer diese Dateisegmente und Rechte-Kennzeichen zu dem Content enthaltenden DRM-Datei zu trennen sowie die den Content enthaltenden Teile für einen Upload in ein Peer-To-Peer-Netzwerk zur Verfügung zu stellen und Angaben zum Rechteverwerter enthaltende und/oder Nutzungsbedingungen für den betreffenden Content vorgebende Rechte-Kennzeichen an einen Server oder ein zu dessen Empfang bestimmtes anderes Endgerät des Netzwerks zu übertragen.

19. Computerprogrammprodukt nach einem der Ansprüche 14 bis 17 und dem Anspruch 18.
